# EUROPÄISCHE PATENTSCHRIFT

(11) **EP 0 801 244 B1**
(45) Veröffentlichungstag und Bekanntmachung des Hinweises auf die Patenterteilung: **24.10.2001**
(21) Anmeldenummer: 97103679.3
(22) Anmeldetag: 06.03.1997
(51) Int. Cl.: F16D 33/16

(54) **Hydrodynamische Kupplung**
Hydrodynamic coupling
Accouplement hydrodynamique

(30) Priorität: 12.04.1996 DE 19614588
(43) Veröffentlichungstag der Anmeldung: 15.10.1997
(73) Patentinhaber: Voith Turbo GmbH & Co. KG, 89522 Heidenheim (DE)
(72) Erfinder: Adleff, Kurt, 74564 Crailsheim (DE); Höller, Heinz, 74564 Crailsheim (DE); Hercher, Gerd-Peter, 74579 Fichtenau-III (DE); Tietz, Maik, 74564 Crailsheim (DE)
(74) Vertreter: Dr. Weitzel & Partner

(56) Entgegenhaltungen:
- FR-A- 1 470 038
- GB-A- 2 269 221

## Beschreibung

Die Erfindung betrifft eine hydrodynamische Kupplung mit einem Pumpenrad und einem Turbinenrad, die beide einen torusförmigen Arbeitsraum miteinander bilden..

Hydrodynamische Kupplungen haben den Vorteil eines elastischen Arbeitsverhaltens sowie einer sanften, relativ stoßfreien Übertragung eines Drehmoments, beispielsweise von einem Motor auf ein Förderband. Es gibt aber zahlreiche Fälle in der Praxis, in denen es wünschenswert ist, das übertragbare Drehmoment zu begrenzen oder abzusenken. Hierdurch wird der Motor beim Anfahren noch mehr geschont.

DE 43 11 350 A1 zeigt und beschreibt eine hydrodynamische Kupplung mit einer selbsttätigen Drehmomentbegrenzung. Hierbei ist radial innerhalb des Pumpenrades ein Stauraum vorgesehen. Vor dem Anfahren der Kupplung befindet sich der größte Teil des Öles, das als Arbeitsmedium dient, innerhalb des genannten Stauraumes. Beim Anfahren der Kupplung wird zunächst das Pumpenrad in Umlauf versetzt. Da der Arbeitsraum hierbei zunächst noch wenig oder gar kein Öl enthält, wird das Turbinenrad zunächst noch nicht angetrieben. Im Stauraum bildet sich ein Ölring, der nach und nach über eine Überströmkante in denjenigen Teil des Arbeitsraumes eintritt, der aus dem Pumpenrad gebildet wird, und der schließlich völlig in den Arbeitsraum überströmt. Auf diese Weise wird ein relativ sanftes Anfahren erreicht.

Die meisten hydrodynamischen Kupplungen werden mit Öl als Betriebsmittel betrieben. Beim Betrieb erwärmt sich das Öl. Es muß somit gekühlt werden. Zu diesem Zweck wird das Öl ständig in einem Kühlkreislauf umgewälzt. Dabei wird es durch einen Wärmetauscher hindurchgeführt, der sich außerhalb der hydrodynamischen Kupplung befindet. Die gesamte hydrodynamische Kupplung ist dabei von einem Gehäuse umschlossen, das einen ersten Anschluß zum Abführen des Öles und einen zweiten Anschluß zum Wiedereinführen des Öles nach Durchlauf des Wärmetauschers besitzt.

Eine gattungsgemäße hydrodynamische Kupplung ist aus der Druckschrift GB 2 269 221 A bekannt. Diese umfaßt ein Pumpenrad und ein Turbinenrad, die miteinander einen torusförmigen Arbeitsraum bilden. An das Pumpenrad ist eine Schale drehfest angeschlossen, welche das Turbinenrad umgreift und mit diesem einen Ringspalt bildet, welcher seinerseits mit dem Arbeitsraum kommuniziert. An die Schale ist eine ringförmige Pumpschale angeschlossen. In dieses gelangt Betriebsmittel aus dem Arbeitsraum.

Das Abführen erfolgt durch Eintauchen eines Tauchrohres - sogenannte Staudruckpumpe - in den Ölsumpf. Der Ölsumpf ist aus einer ringförmigen Schale gebildet, die im Betrieb der hydrodynamischen Kupplung - zusammen mit dem Pumpenrad - umläuft. Das Mundstück der Staudruckpumpe taucht mehr oder minder tief in den Ölsumpf ein, der sich in der genannten Schale bildet.

Durch Variieren der Ölzufuhr kann die Antriebsdrehzahl in einem gewissen Bereich angepaßt werden. Ebenso ist es möglich, mit einer speziellen Regelung eine Arbeitsmaschine mit konstanter Beschleunigung zu starten, unabhängig von der Last.

Ein Nachteil solcher Kupplungen mit Staudruckpumpen und ringförmiger Ölschale besteht darin, daß sich der aus Pumpenrad und Turbinenrad gebildete torusförmige Arbeitsraum bei Stillstand der Kupplung nicht vollständig entleert.

Der Erfindung liegt die Aufgabe zugrunde, eine Kupplung der genannten Art derart zu gestalten, daß eine vollständige Entleerung des Arbeitsraumes beim Abschalten der Kupplung möglich ist.

Diese Aufgabe wird durch die Merkmale von Anspruch 1 gelöst.

Die Erfindung ist anhand der Zeichnung näher erläutert. Darin ist eine hydrodynamische Kupplung in einem Querschnitt dargestellt.

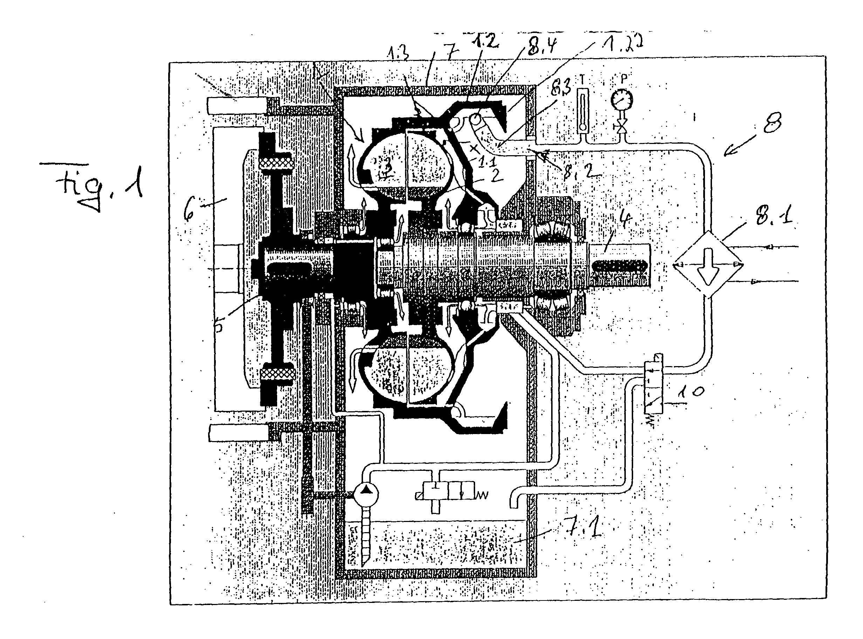

- Fig. 1: zeigt die Kupplung in einer Gesamtansicht.

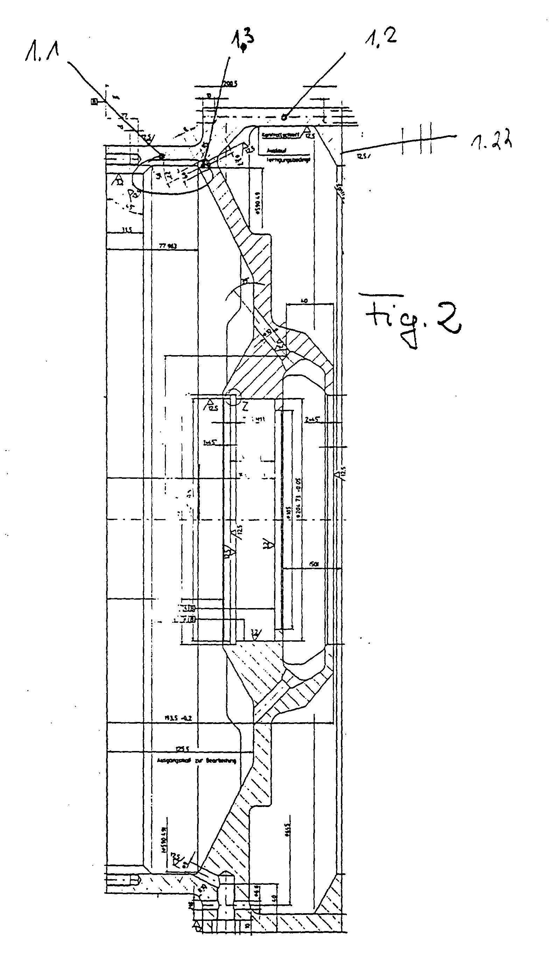

- Fig. 2: zeigt in vergrößerter Darstellung die das Turbinenrad umgreifende Schale mit hieran angeformter Pumpschale.

Die Kupplung weist ein Pumpenrad 1 auf sowie ein Turbinenrad 2. Die beiden Räder bilden miteinander einen torusförmigen Arbeitsraum 3.

Mit dem Pumpenrad 1 ist ein schalenförmiges Wandteil 1.1 drehfest verbunden. Dieses erstreckt sich radial einwärts bis zu einer Abtriebswelle 4. Das Pumpenrad selbst sitzt auf einer Antriebswelle 5, über welche Drehmoment von einer Schwungscheibe 6 sowie von einem der Schwungscheibe 6 vorgeschalteten Motor (nicht dargestellt) eingeleitet wird.

Pumpenrad 1 und Turbinenrad 2 sind von einem Kupplungsgehäuse 7 umschlossen.

Es ist ein externer Kreislauf 8 vorgesehen, um das Betriebsmittel, in diesem Falle Öl, während des Betriebes zu kühlen. Der externe Kreislauf 8 umfaßt einen Wärmetauscher 8.1. Entscheidendes Bauteil ist eine sogenannte Staudruckpumpe 8.2. Diese weist einen Rohrstutzen 8.3 mit einem Mundstück 8.4 auf.

Das genannte schalenförmige Wandteil 1.1 enthält eine ringförmige Pumpschale 1.2. Diese ist für die Erfindung von entscheidender Bedeutung. Wie man sieht, kommuniziert der Inhalt der Pumpschale 1.2 mit dem Arbeitsraum 3 über eine Verbindungsleitung 1.3. Die Pumpschale 1.2 ist derart gestaltet und angeordnet, daß sich der Spiegel des darin ansammelnden Betriebsmittels radial außerhalb der Verbindungsleitung 1.3 befindet, mindestens aber auf demselben Radius wie die Verbindungsleitung 1.3.

Die Kupplung enthält weitere Bauteile, die aber für die Erfindung nicht von primärer Bedeutung sind. Wie man sieht, ist das Gehäuse 7 derart gestaltet, daß es einen Arbeitsmediumsumpf 7.1 aufnehmen kann. Weiterhin sind Ventile vorgesehen, beispielsweise das Ventil 10, mit dem die Betriebscharakteristik der Kupplung einstellbar ist.

Die Pumpschale 1.2 ist radial derart weit außen angeordnet, daß sich bei Stillstand (beispielsweise bei Notausschaltung der Kupplung) der Arbeitsraum über die Verbindungsleitung 1.3 selbsttätig entleert. Das Arbeitsmedium fließt hierbei durch die Verbindungsleitung 1.3 in die Pumpschale 1.2, und von dort über die radial innere Kante einer Wand 1.2.2 in den Tank (Arbeitsmediumsumpf 7.1).

Das Anfahren erfolgt demgemäß bei völlig entleertem Arbeitsraum 3.

## Patentansprüche

1. Hydrodynamische Kupplung mit regelbarem Drehmoment, mit den folgenden Merkmalen:
1.1 ein Pumpenrad (1) und ein Turbinenrad (2) bilden miteinander einen torusförmigen Arbeitsraum (3);
1.2 an das Pumpenrad (1) ist eine Schale (1.1) drehfest angeschlossen, die das Turbinenrad (2) umgreift und mit diesem einen Ringspalt bildet, der seinerseits mit dem Arbeitsraum (3) kommuniziert;
1.3 an die Schale (1.1) ist eine ringförmige Pumpschale (1.2) drehfest angeschlossen;
1.4 es ist ein feststehendes Kupplungsgehäuse (7) vorgesehen, das die beiden Räder umgibt;
1.5 die Kupplung weist einen Kühlkreislauf (8) zum Kühlen des Betriebsmittels mit einem extern zum Kupplungsgehäuse angeordneten Wärmetauscher und einen feststehenden Betriebsmittelsumpf (7.1) auf;
1.6 innerhalb des Gehäuses (7) ist eine feststehende Staudruckpumpe (8.2) angeordnet, die einen in die Pumpschale (1.2) eintauchenden Rohrstutzen (8.3) aufweist;
**gekennzeichnet durch** die folgenden Merkmale:
1.7. in der Wandung der Schale (1.1) ist mindestens eine Bohrung (1.3) vorgesehen, die eine leitende Verbindung zwischen dem radial äußeren Bereich des Ringspaltes zwischen Pumpenrad (1) und Turbinenrad (2) und dem Innenraum der Pumpschale (1.2) herstellt:
1.8 die Pumpschale (1.2) ist derart angeordnet, daß sich die gegen den Pumpschalen-Innenraum gerichtete Mündung der Bohrung (1.3) auf demselben Radius wie der radial äußerste Punkt des Arbeitsraumes, oder auf einem größeren Radius als dieser befindet.

2. Kupplung nach Anspruch 1, **dadurch gekennzeichnet, daß** die Pumpschale (1.2) axial durch eine Wand (1.2.2) begrenzt ist, deren Innendurchmesser größer oder gleich dem größten Innendurchmesser der Schale (1.1.8) ist.

3. Kupplung nach Anspruch 1 oder 2, **dadurch gekennzeichnet, daß** die Schale (1.1) eine Ausdrehung aufweist, die deren Grund auf einen größeren Druchmesser legt.

4. Kupplung nach einem der Ansprüche 1 bis 3, **dadurch gekennzeichnet, daß** die Eintauchtiefe des Rohrstutzens (8.3) der Staudruckpumpe variabel ist.

## Claims

1. Hydrodynamic coupling with controllable torque, with the following features:
1.1 a pump wheel (1) and a turbine wheel (2) together form a torus-shaped workspace (3);
1.2 a basin (1.1) is non-rotatably connected to the pump wheel (1), which basin (1.1.) encloses the turbine wheel (2) and forms an annular gap therewith, which in turn interconnects with the workspace (3);
1.3 an annular pump basin (1.2) is non-rotatably connected to the basin (1.1);
1.4 a stationary coupling housing (7) which surrounds both wheels is provided;
1.5 the coupling has a cooling circuit (8) for cooling the operating material with a heat exchanger external to the coupling housing and a stationary operating material sump (7.1);
1.6 a stationary dynamic pressure pump (8.2) is arranged inside the housing (7) which has a tube connection piece (8.3) which is immersed in the pump basin (1.2);
**characterised by** the following features:
1.7 at least one hole (1.3) is provided in the wall of the basin (1.1) which provides a conveying connection between the radially external region of the annular gap between pump wheel (1) and turbine wheel (2) and the interior of the pump basin (1.2);
1.8 the pump basin (1.2) is arranged in such a way that the aperture of the hole (1.3) directed toward the interior of the pump basin is located on the same radius as the radially outermost point of the workspace, or on a radius which is larger.

2. Coupling according to claim 1, **characterised in that** the pump basin (1.2) is limited axially by a wall (1.2.2), the internal diameter of which is greater or equal to the largest internal diameter of the basin (1.1.8).

3. Coupling according to claim 1 or 2, **characterised in that** the basin (1.1) has a hollowed out part, the base of which is located on a larger diameter.

4. Coupling according to one of claims 1 to 3, **characterised in that** the immersion depth of the tube connection piece (8.3) of the dynamic pressure pump is variable.

## Revendications

1. Accouplement hydrodynamique à couple réglable, présentant les caractéristiques suivantes:
1.1 une roue de pompe **(1)** et une roue de turbine **(2)** forment ensemble une enceinte de travail **(3)** torique ;
1.2 à la roue de pompe **(1)** est raccordée, de façon assujettie en rotation, une coque **(1.1)** entourant la roue de turbine **(2)** et formant avec celle-ci un interstice annulaire, communiquant de son côté avec l'enceinte de travail **(3)** ;
1.3 à la coque **(1.1)** est raccordée, de façon assujettie en rotation, une coque de pompe **(1.2)** de forme annulaire ;
1.4 un carter d'accouplement **(7)** stationnaire est prévu, entourant les deux roues ;
1.5 l'accouplement présente un circuit de refroidissement **(8)** pour le refroidissement du fluide de fonctionnement, à l'aide d'un échangeur de chaleur, disposé en externe par rapport au carter d'accouplement, et d'un carter de fluide de fonctionnement **(7.1)** stationnaire;
1.6 à l'intérieur du carter **(7)** est disposée une pompe à pression dynamique **(8.2)** stationnaire, présentant une tubulure **(8.3)** plongeant dans la coque de pompe **(1.2)**, **caractérisée par** les propriétés suivantes :
1.7 dans la paroi de la coque **(1.1)** est prévu au moins un perçage **(1.3)**, établissant une liaison conductrice entre la zone radialement extérieure de l'interstice annulaire existant entre la roue de pompe **(1)** et la roue de turbine **(2)**, et l'enceinte intérieure de la coque de pompe **(1.2)** ;
1.8 la coque de pompe **(1.2)** est disposée de manière que l'embouchure, tournée vers l'espace intérieur de coque de pompe, du perçage **(1.3)** se trouve sur le même rayon que le point radialement le plus extérieur de l'enceinte de travail, ou bien sur un rayon supérieur à celui-ci.

2. Accouplement selon la revendication 1, **caractérisé en ce que** la coque de pompe **(1.2)** est délimitée radialement par une paroi **(1.2.2)** dont le diamètre intérieur est supérieur ou identique au diamètre intérieur maximal de la coque **(1.1.8)**.

3. Accouplement selon la revendication 1 ou 2, **caractérisé en ce que** la coque **(1.1)** présente une saignée qui donne à son fond un plus grand diamètre.

4. Accouplement selon l'une des revendications 1 à 3, **caractérisé en ce que** la profondeur de pénétration de la tubulure **(8.3)** de la pompe à pression dynamique est variable.
